# EUROPEAN PATENT SPECIFICATION

(11) **EP 2 538 707 B1**
(45) Date of publication and mention of the grant of the patent: **28.08.2019**
(21) Application number: 11290280.4
(22) Date of filing: 21.06.2011
(51) Int. Cl.: H04W 8/20, H04L 29/06, H04W 12/06

(54) **Method for uploading subscriber credentials and associated equipment**
Verfahren zum Hochladen von Teilnehmerberechtigungen und zugehöriges Gerät
Procédé de chargement des autorisations d'abonné et équipement associé

(43) Date of publication of application: 26.12.2012
(73) Proprietor: Alcatel Lucent, 91620 Nozay (FR)
(72) Inventor: Conte, Alberto, 91620 Nozay (FR); Chakri, Al Mahdi, 91620 Nozay (FR)
(74) Representative: Croonenbroek, Thomas Jakob

(56) References cited:
- US-A1- 2009 191 857
- US-A1- 2009 205 028
- US-A1- 2010 106 967
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 22 June 2010 (2010-06-22), pages 1-87, XP050441986, [retrieved on 2010-06-22]
- "Machine-to-Machine communications (M2M); Functional architecture", ETSI DRAFT; 00002V0112, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.11.2, 10 May 2011 (2011-05-10), pages 1-197, XP014062936, [retrieved on 2011-05-10]
- BADRA M ET AL: "Toward SSL integration in SIM smartcards", WIRELESS COMMUNICATIONS AND NETWORKING CONFERENCE, 2004. WCNC. 2004 IE EE ATLANTA, GA, USA 21-25 MARCH 2004, PISCATAWAY, NJ, USA,IEEE, vol. 2, 21 March 2004 (2004-03-21), pages 889-894, XP010708248, DOI: 10.1109/WCNC.2004.1311304 ISBN: 978-0-7803-8344-9
- BT ET AL: "Packing details", 3GPP DRAFT; S3-090792, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai; 20090504, 4 May 2009 (2009-05-04), XP050347487, [retrieved on 2009-05-04]

## Description

### BACKGROUND OF THE INVENTION

The present invention relates to the field of identification in wireless communications and more specifically of the credentials necessary to identify a user equipment in a wireless network.

In the state of the art, the authentication of a subscriber of a wireless network is insured by the use of Subscriber Identity Module (SIM) cards (in 2G technology) and Universal Integrated Circuit Card (UICC) (in 3G and Long Term Evolution (LTE) technologies). The current use of such cards provides high security but is also very restricting. Indeed, the SIM cards or UICCs establish an exclusive attachment between said card and a network operator. As a consequence, the subscriber has to change of card if he wants to change of network operator which can be problematic in the case of a large deployment of machine-to-machine equipments as the cards of all the equipments would have to be changed. Furthermore, In Worldwide Interoperability for Microwave Access (Wimax) technology, possibility is given to achieve an over the air provisioning for blank Wimax devices (that is to say Wimax devices that are not yet attached to a network operator) that allows to remotely subscribe and get attachment to a Wimax operator.

However, such remote feature is not available in 2G, 3G or LTE networks mainly for security reasons because of the difficulty of insuring a high enough security in the over the air transfer of the credentials.

The documents "3rd Generation Partnership Project; Technical Specification Group Services and System Aspects; Feasibility study on the security aspects of remote provisioning and change of subscription for Machine to Machine (M2M) equipment (Release 9)" and US 2009/205028 A1 disclose the provisioning of M2M devices.

### SUMMARY OF THE INVENTION

It is therefore an object of the present invention to insure a secured transfer of credentials in order to configure SIM cards or UICC in 2G, 3G and LTE networks. This object is solved by a method having the features of claim 1, an authentication server having the features of claim 13 and an integrated identity module having the features of claim 14. Advantageous embodiments thereof are defined in the respective dependent claims.

### BRIEF DESCRIPTION OF THE DRAWINGS

FIG.1 is a block diagram representing the different step of a first embodiment of the present invention;
FIG.2 is a diagram of a user equipment and its connections with network entities in a first configuration scheme;
FIG.3 is a diagram of a user equipment and its connections with network entities in a second configuration scheme;
FIG.4 is a block diagram representing the different step of a second embodiment of the present invention
FIG.5 is a diagram of a user equipment and its connections with network entities in a third configuration scheme;

### DETAILED DESCRIPTION OF THE INVENTION

As used herein, the term "SIM" refers to the acronym Subscriber Identity Module;
As used herein, the term "UICC" refers to the acronym Universal Integrated Circuit Card;
As used herein, the term "USIM" refers to the acronym Universal Subscriber Identity Module;
As used herein, the term "LTE" refers to the acronym Long Term Evolution;
As used herein, the term "WIMAX" refers to the acronym Worldwide Interoperability for Microwave Access;
As used herein, the terms "2G" and "3G" refer respectively to the expression second generation and third generation;
As used herein, the term "IMSI" refers to the acronym International Mobile Subscriber Identity;
As used herein, the term "EAP" refers to the acronym Extensible Authentication Protocol;
As used herein, the term "TTLS" refers to the acronym Tunnelled Transport Layer Security;
As used herein, the term "TLS" refers to the acronym Transport Layer Security;
As used herein, the term "OMA-DM" refers to the acronym Open Mobile Alliance-Device Management;
As used herein, the term "GPS" refers to the acronym Global Positioning System;

The embodiments of the present invention refer to a method for securely uploading subscriber credentials from a remote server onto a user equipment.

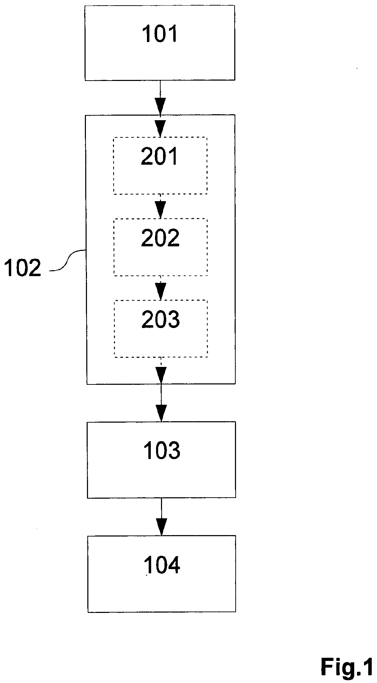

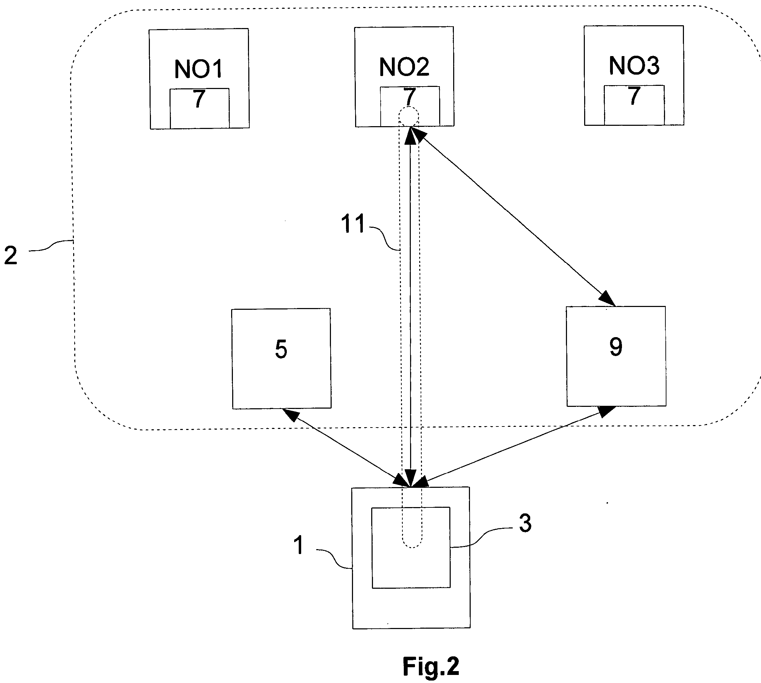

Figure 1 represents a block diagram with the different steps of the method and figure 2 represents an example of a network structure and the connections established with the user equipment 1 during the steps of the method, said connections being wireless connections.

The first step 101 refers to the implementation, by the user equipment manufacturer, of an X.509 certificate, a tunnel establishment protocol stack and a client authentication within an integrated identity module 3 of a user equipment 1. The client authentication refers to provisional universal subscriber identity module (USIM) parameters, for example a provisional secret key and a provisional international mobile subscriber identity (IMSI). Said provisional USIM parameters are provided by a dedicated entity of the network 2 herein called Primary Authentication Authority (PAA) 5 which corresponds to an authority of the network 2 capable of establishing a connection between a user equipment 1 and a remote server of the network 2. The implementation of the X.509 certificate, the tunnel establishment protocol stack and the client authentication is achieved by the integrated identity module 3 manufacturer or by the user equipment 1 manufacturer. Furthermore, it has to be noted that the integrated identity module 3 may refer to a SIM card or a UICC.

The second step 102 refers to the establishment of a secured connection between a remote authentication server 7 of a network operator Noi with i=1, 2, 3 and the user equipment 1 and comprises the following sub-steps:
- The first sub-step 201 corresponds to the activation of the user equipment 1 and the authentication of said user equipment 1 by the PAA 5 using the client authentication embedded in the integrated identity module 3 of the user equipment 1. The PAA 5 allowing thus to establish an initial connection with a server of the network 2. However, it has to be noted that the PAA does not provide any services (calls, Internet connections...) other than the initial connection toward a launching server 9 of the user equipment manufacturer and an authentication server 7 of a network operator NO.
- The second sub-step 202 corresponds to the connection of the user equipment to a launching server 9 of the user equipment manufacturer. This can be done by an automatic script installed in the user equipment 1. The network operator is then chosen (either by the user (through its user equipment 1) or by the user equipment manufacturer depending on the configuration), for example the network operator NO2 in figure 2, the user becoming a subscriber of NO2. A security key is also generated and saved in the user equipment 1 on one side and sent, by the launching server 9, to the authentication server 7 of the chosen network operator NO2 on the other side.
- The third sub-step 203 corresponds to the establishment by the chosen network operator NO2 of a secured management session between the authentication server 7 of said chosen network operator NO2 and the user equipment 1. Such session can be achieved, for example, by using a symmetric cryptography protocol using the security key generated in step 202.

The third step 103 corresponds to the establishment a secured tunnel 11 between the integrated identity module 3 and the authentication server 7 of the NO2 through the established secured connection. Indeed, the existing UICC management protocols allow to configure all the USIM parameters except the secret key so that a tunnel establishment is necessary to upload said secret key. Such establishment is achieved by using the tunnel establishment protocol stack embedding in the integrated identity module 3 and the use of the X.509 certificate to insure the security protection of the tunnel 11. Different protocols can be used to establish the secured tunnel 11 as for example an extensible authentication protocol (EAP). The tunnel establishment protocol stack corresponds for example to an Extensible Authentication Protocol-Tunnelled Transport Layer Security (EAP-TTLS) client and the authentication for the establishment of the tunnel 11 is performed based on the EAP-TTLS and leads to the creation of a Transport Layer Security (TLS) tunnel 11 between the integrated identity module 3 and the authentication server 7.

The fourth step 104 corresponds to the uploading of the subscriber credentials from the authentication server 7 of the NO2 onto the integrated identity module 3 through the established secured tunnel 11. Indeed, in order to securely upload the subscriber credentials, the upload has to be "opaque" for the user equipment 1, that is to say that the user equipment 1 must not be able to read the subscriber credentials.

Thus, the TLS tunnel configuration allows the upload of the credentials from the authentication server 7 to the integrated identity module 3 while avoiding the handling of said credentials by the user equipment 1. Furthermore, the tunnel establishment protocol stack allows the installation of the credentials in the integrated identity module 3.

The subscriber credentials refer to at least one parameter of a universal subscriber identity module (USIM). Depending on the embodiments, only the secret key or other USIM parameters such as the IMSI can be uploaded. However, as the capacity of the central processing unit (CPU) of the integrated identity module 3 is generally limited, the uploading of only the secret key may be preferred. In such case, the other USIM parameters, such as the IMSI, can be uploaded using a classical UICC management method as the Open Mobile Alliance-Device Management (OMA-DM) for instance.

When the subscriber credentials are uploaded, the subscriber can then access the services provided by the network operator to which the user equipment is attached (NO2 in the present case).

If afterwards, for example at the end of the subscription contract, the subscriber or the user equipment manufacturer depending on the configuration, decides to change of network operator, for example because of a better offer of another network operator (NO3 for instance). The switching process from one operator to the other is simply achieved by sending, from the launching server 9 of the user equipment manufacturer of a request to the authentication server 7 of the newly chosen network operator NO3 to install a new USIM into the integrated identity module 3 of the user equipment 1. Said request being triggered by the user equipment 1 of the user equipment manufacturer depending on the configuration.

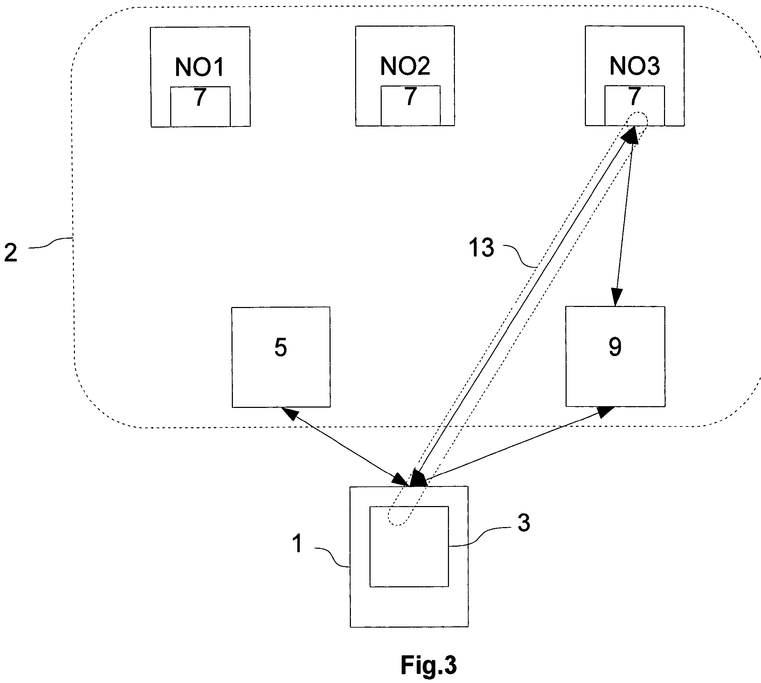

At the reception of the request, the network operator NO3 applies the procedure described previously in steps 102-104 to create a secured tunnel 13 with the integrated identity module 3 of the user equipment 1 and upload the new USIM parameters as described in Fig.3.

In order to better understand the embodiments of the present invention, an example will be described hereinafter.

The example refers to a car manufacturer producing cars equipped with a connected Global Positioning system (GPS). In this example, the configuration corresponds to a large deployment configuration wherein the choice of the network operator is decided by the car manufacturer.

During the car assembly, the car manufacturer install a UICC with a tunnel establishment protocol stack, an X.509 certificate and a client authentication comprising provisional USIM parameters provided by the PAA.

At the sale of a car, the connected GPS embedded in the car get authenticated and authorized in the network during its initial activation thanks to the provisional USIM parameters. Furthermore, an automatic script implemented in the UICC triggers an initial connection toward the launching server of the car manufacturer at the activation of the GPS. The launching server sends on one side a security key to the connected GPS and the authentication server and on the other side an activation request of the connected GPS to the authentication server of the chosen network operator. At the reception of the activation request, the authentication server established a secured management session with the connected GPS using the security key. Then, the authentication server creates a secured TLS tunnel toward the UICC using the tunnel establishment protocol stack and the X.509 certificate embedded in the UICC and upload the subscriber credentials onto the UICC through the TLS tunnel. Besides, other configuration information can be installed by the authentication server such as a network preference list, a roaming preference list...

At the end of the uploading, the connected GPS is attached to the selected network operator and can access to the services provided by said operator.

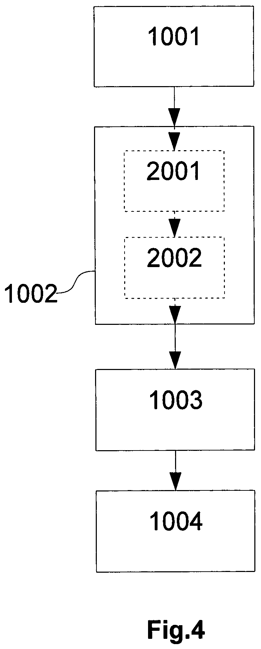

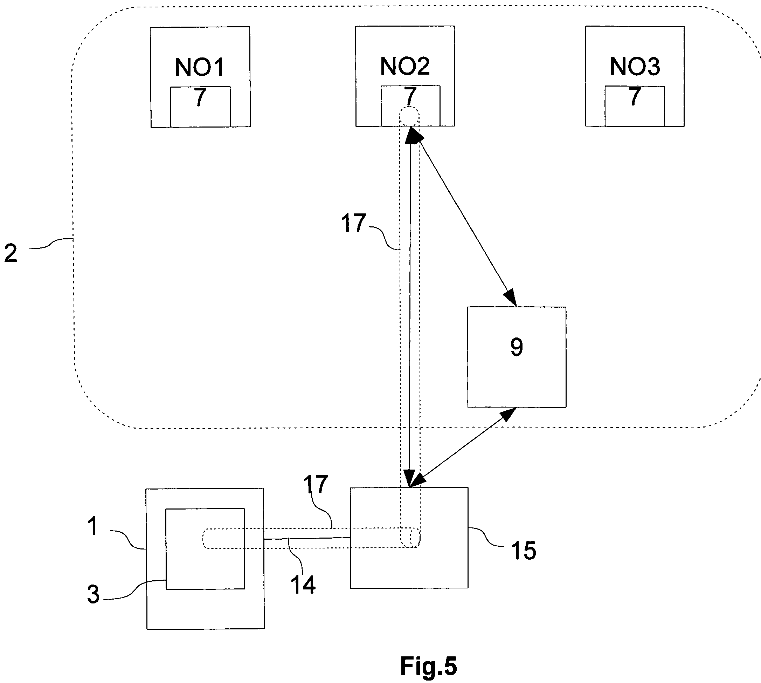

Besides, in the case of a decision by the user of its preferred network operator, a simpler procedure wherein no dedicated network entity such as the PAA is necessary can be used. Thus, according to another embodiment, the different steps of the method for uploading the subscriber credentials are given hereinafter based on the block diagram presented in Fig.4 and the network diagram of Fig.5.

The first step 1001 corresponds to the step 101 of the previous embodiment and refers to the implementation, by the user equipment manufacturer, of an X.509 certificate, a tunnel establishment protocol stack and a client authentication within an integrated identity module 3 of a user equipment 1.

The second step 1002 corresponds to the establishment of a secured connection between a remote authentication server 7 of a network operator NOi with i=1, 2, 3 and the user equipment 1.

Said step 1002 comprises the sub-step 2001 which is the connection of the user equipment 1 to a launching server 9 of the user equipment manufacturer. Such connection is achieved by plugging, for instance with a cable 14, the user equipment 1 to a connected personal computer 15. The user then log on to the user equipment manufacturer website (corresponding to a launching server 9 of said manufacturer) and create an account to set up its user equipment 1 subscription. During this step, the user selects a network operator (NO2 in the present case) and possibly some other configuration details (subscription model, roaming preferences...). An activation request is then sent by the launching server 9 to the authentication server 7 of the selected network operator NO2, said request comprising the needed information such as the Internet Protocol (IP) address, the management session key...as well as the subscription model selected by the user, roaming preferences...in order for the selected network operator NO2 to have all the necessary information to manage to attachment of the user equipment 1.
The sub-step 2002 refers to the establishment, by the authentication server 7 of the network operator NO2 of a secured session with the integrated identity module 3.

The third step 1003 correspond to the establishment of a secured tunnel 17 between the authentication server 7 of the network operator NO2 and the integrated identity module 3 and is realized as described previously in step 103.

The fourth step 1004 refers to the uploading and installation of the subscriber credentials within the integrated identity module 3.

When the configuration of the integrated identity module 3 is over, the user can unplug its equipment from the personal computer 15 and can get connected to the network operator NO2 and get access to the offered services.

Furthermore, in case of change of network operator, steps 1002-1004 are achieved choosing another network operator to get connected to said new network operator.

Thus, the embodiments of the present invention allow a remote upload and installation of subscriber credentials within an integrated identity module while insuring security and confidentiality requirements thanks to the establishment of a secured tunnel between a remote authentication server and the integrated identity module. Said solution allows to switch from one operator to another without having to change or reconfigure manually the integrated identity module which leads to the possibility of operator switching over a large amount of devices without requiring important logistic means.

## Claims

1. Method for uploading subscriber credentials from a remote authentication server (7) of a network operator (NOi) onto a user equipment (1) equipped with a integrated identity module (3) via a network (2) wherein said integrated identity module (3) comprises means to establish a secured tunnel (11, 13, 17) with the remote authentication server (7) and wherein said method comprises the following steps:
- installing (101, 1001) a tunnel establishment protocol stack, an X.509 certificate and a client authentication into the integrated identity module (3);
- establishing (102, 1002) a secured connection between the remote authentication server (7)
and the user equipment (1) using the client authentication by:
- establishing a connection between the user equipment (1) and a server (9) of the user equipment manufacturer;
- sending from the server (9) of the user equipment manufacturer to the remote authentication server (7), a request to get an attachment of the user equipment (1) to the network operator (NO1, NO2, NO3) corresponding to the said remote authentication server (7),
- establishing by the remote authentication server (7) the secured connection using a secured management session,
- establishing (103, 1003) the secured tunnel (11, 13, 17) between the integrated identity module (3) and the remote authentication server (7) through the established secured connection using the X.509 certificate;
- uploading the subscriber credentials from the remote authentication server (7) onto the integrated identity module (3) through the established secured tunnel (11, 13, 17).

2. Method for uploading subscriber credentials in accordance with claim 1 wherein the integrated identity module (3) is a universal integrated circuit card (UICC).

3. Method for uploading subscriber credentials in accordance with claim 1 or 2 wherein the integrated identity module (3) is a subscriber identity module (SIM) card.

4. Method for uploading subscriber credentials in accordance with one of the previous claims wherein the subscriber credentials comprise at least one parameter of a universal subscriber identity module (USIM).

5. Method for uploading subscriber credentials in accordance with claim 4 wherein the credentials comprise a secret key of a universal subscriber identity module (USIM).

6. Method for uploading subscriber credentials in accordance with claim 4 wherein the credentials comprise an international mobile subscriber identity (IMSI).

7. Method for uploading subscriber credentials in accordance with one of the previous claims wherein the client authentication comprises at least one provisional generic parameter of a universal subscriber identity module (USIM) allowing an initial connection to the remote authentication server (7).

8. Method for uploading subscriber credentials in accordance with claim 7 wherein the at least one provisional generic parameter of a universal subscriber identity module (USIM) allowing an initial connection to the remote authentication server (7) is provided by a dedicated entity (5) of the network (2).

9. Method for uploading subscriber credentials in accordance with one of the previous claims wherein the means to establish the secured tunnel (11, 13, 17) with the remote authentication server (7) comprise a client extensible authentication protocol (EAP).

10. Method for uploading subscriber credentials in accordance with claim 8 wherein the means to establish a secured tunnel (11, 13, 17) with the remote authentication server (7) comprise a client extensible authentication protocol tunnelled transport layer security (EAP-TTLS).

11. Method for uploading subscriber credentials in accordance with one of the previous claims wherein the secured connection established between the remote authentication server (7) and the user equipment (1) is at least partly a wireless connection.

12. Method for uploading subscriber credentials in accordance with one of the previous claims wherein the remote authentication server (7) is an authentication server of a mobile network operator (NO1, NO2, NO3).

13. Network server (7) comprising means to establish a secured connection with a user equipment (1) using a secured management session and means to establish a secured tunnel with an integrated identity module (3) implemented in said user equipment (1) based on said secured management session and using an X.509 certificate installed in the integrated identity module (3) wherein the means to establish the secured tunnel comprises means for receiving from a server (9) of the user equipment manufacturer, a request to get an attachment of the user equipment (1) to the network operator (NO1, NO2, NO3) corresponding to the said network server (7) and means for establishing the secured connection using the secured management session, wherein the network server (7) comprises means for uploading subscriber credentials onto the integrated identity module (3) through the established secured tunnel.

14. Integrated identity module (3) implemented in a user equipment (1) and comprising means to establish a secured tunnel (11, ,13, 17) with a remote server (7) through a connection established between said remote server (7) and said user equipment (1) using an X.509 certificate installed in the integrated identity module (3) and means configured to receive, through the established secured tunnel, and install subscriber credentials in said integrated identity module (3) wherein the means to establish a secured tunnel (11, 13, 17) with a remote server (7) comprise means for establishing a connection with a server (9) of the user equipment manufacturer for requesting an attachment of the user equipment (1) to the network operator (NO1, NO2, NO3) corresponding to the said remote server (7).

## Patentansprüche

1. Verfahren zum Hochladen von Teilnehmerberechtigungen von einem entfernten Authentifizierungsserver (7) eines Netzbetreibers (NOi
- *Network Operator*) auf ein Benutzergerät (1), das mit einem integrierten Identitätsmodul (3) ausgestattet ist, über ein Netzwerk (2), wobei das integrierte Identitätsmodul (3) Mittel zum Aufbauen eines gesicherten Tunnels (11, 13, 17) mit dem entfernten Authentifizierungsserver (7) umfasst und wobei das Verfahren die folgenden Schritte umfasst:
- Installieren (101, 1001) eines Tunnelaufbau-Protokollstapels, eines X.509-Zertifikats und einer Client-Authentifizierung in das integrierte Identitätsmodul (3);
- Aufbauen (102, 1002) einer gesicherten Verbindung zwischen dem entfernten Authentifizierungsserver (7) und dem Benutzergerät (1) mittels der Client-Authentifizierung durch Folgendes:
- Aufbauen einer Verbindung zwischen dem Benutzergerät (1) und einem Server (9) des Benutzergeräteherstellers;
- Senden, von dem Server (9) des Benutzergeräteherstellers an den entfernten Authentifizierungsserver (7), einer Anfrage zum Erhalten einer Verbindung des Benutzergerätes (1) zu dem Netzbetreiber (NO1, NO2, NO3), der dem entfernten Authentifizierungsserver (7) entspricht,
- Aufbauen, durch den entfernten Authentifizierungsserver (7), der gesicherten Verbindung mittels einer gesicherten Verwaltungssitzung,
- Aufbauen (103, 1003) des gesicherten Tunnels (11, 13, 17) zwischen dem integrierten Identitätsmodul (3) und dem entfernten Authentifizierungsserver (7) über die aufgebaute gesicherte Verbindung mittels des X.509-Zertifikats;
- Hochladen der Teilnehmerberechtigungen von dem entfernten Authentifizierungsserver (7) auf das integrierte Identitätsmodul (3) über den aufgebauten gesicherten Tunnel (11, 13, 17).

2. Verfahren zum Hochladen von Teilnehmerberechtigungen nach Anspruch 1, wobei das integrierte Identitätsmodul (3) eine universelle integrierte Schaltungskarte (UICC - *Universal Integrated Circuit Card*) ist.

3. Verfahren zum Hochladen von Teilnehmerberechtigungen nach Anspruch 1 oder 2, wobei das integrierte Identitätsmodul (3) eine Teilnehmer-Identitätsmodul (SIM - *Subscriber Identity Module*) - Karte ist.

4. Verfahren zum Hochladen von Teilnehmerberechtigungen nach einem der vorhergehenden Ansprüche, wobei die Teilnehmerberechtigungen mindestens einen Parameter eines universellen Teilnehmer-Identitätsmoduls (USIM - *Universal Subscriber Identity Module*) umfassen.

5. Verfahren zum Hochladen von Teilnehmerberechtigungen nach Anspruch 4, wobei die Berechtigungen einen geheimen Schlüssel eines universellen Teilnehmer-Identitätsmoduls (USIM - *Universal Subscriber Identity Module*) umfassen.

6. Verfahren zum Hochladen von Teilnehmerberechtigungen nach Anspruch 4, wobei die Berechtigungen eine internationale Mobilteilnehmeridentität (IMSI - *International Mobile Subscriber Identity*) umfassen.

7. Verfahren zum Hochladen von Teilnehmerberechtigungen nach einem der vorhergehenden Ansprüche, wobei die Client-Authentifizierung mindestens einen vorläufigen generischen Parameter eines universellen Teilnehmer-Identitätsmoduls (USIM - *Universal Subscriber Identity Module*) umfasst, welcher eine erste Verbindung zu dem entfernten Authentifizierungsserver (7) gestattet.

8. Verfahren zum Hochladen von Teilnehmerberechtigungen nach Anspruch 7, wobei der mindestens eine vorläufige generische Parameter eines universellen Teilnehmer-Identitätsmoduls (USIM-*Universal Subscriber Identity Module*), welcher eine erste Verbindung zu dem entfernten Authentifizierungsserver (7) gestattet, durch eine dedizierte Einheit (5) des Netzwerks (2) bereitgestellt wird.

9. Verfahren zum Hochladen von Teilnehmerberechtigungen nach einem der vorhergehenden Ansprüche, wobei die Mittel zum Aufbauen des gesicherten Tunnels (11, 13, 17) mit dem entfernten Authentifizierungsserver (7) ein Client-EAP (Erweiterbares Authentifizierungsprotokoll - *Extensible Authentication Protocol*) umfassen.

10. Verfahren zum Hochladen von Teilnehmerberechtigungen nach Anspruch 8, wobei die Mittel zum Aufbauen eines gesicherten Tunnels (11, 13, 17) mit dem entfernten Authentifizierungsserver (7) ein Client-EAP-TTLS (Erweitertes Authentifizierungsprotokoll mit getunnelter Transportschichtsicherheit - *Extensible Authentication Protocol Tunnelled Transport Layer Security*) umfassen.

11. Verfahren zum Hochladen von Teilnehmerberechtigungen nach einem der vorhergehenden Ansprüche, wobei die gesicherte Verbindung, die zwischen dem entfernten Authentifizierungsserver (7) und dem Benutzergerät (1) aufgebaut wird, zumindest teilweise eine drahtlose Verbindung ist.

12. Verfahren zum Hochladen von Teilnehmerberechtigungen nach einem der vorhergehenden Ansprüche, wobei der entfernte Authentifizierungsserver (7) ein Authentifizierungsserver eines Mobilnetzbetreibers (NO1, NO2, NO3) ist.

13. Netzwerkserver (7), welcher Mittel zum Aufbauen einer gesicherten Verbindung mit einem Benutzergerät (1) mittels einer gesicherten Verwaltungssitzung und Mittel zum Aufbauen eines gesicherten Tunnels mit einem integrierten Identitätsmodul (3), das in dem Benutzergerät (1) implementiert ist, basierend auf der gesicherten Verwaltungssitzung und mittels eines X.509-Zertifikats, das in dem integrierten Identitätsmodul (3) installiert ist, umfasst, wobei die Mittel zum Aufbauen des gesicherten Tunnels Mittel zum Empfangen, von einem Server (9) des Benutzergeräteherstellers, einer Anfrage zum Erhalten einer Verbindung des Benutzergerätes (1) zu dem Netzbetreiber (NO1, NO2, N03), welcher dem Netzwerkserver (7) entspricht, und Mittel zum Aufbauen der gesicherten Verbindung mittels der gesicherten Verwaltungssitzung umfassen, wobei der Netzwerkserver (7) Mittel zum Hochladen von Teilnehmerberechtigungen auf das integrierte Identitätsmodul (3) über den aufgebauten gesicherten Tunnel umfasst.

14. Integriertes Identitätsmodul (3), das in ein Benutzergerät (1) implementiert ist und welches Mittel zum Aufbauen eines gesicherten Tunnels (11, 13, 17) mit einem entfernten Server (7) über eine Verbindung, die zwischen dem entfernten Server (7) und dem Benutzergerät (1) mittels eines X.509-Zertifikats, das in dem integrierten Identitätsmodul (3) installiert ist, aufgebaut wird, und Mittel, die zum Empfangen, über den aufgebauten gesicherten Tunnel, und Installieren von Teilnehmerberechtigungen in dem integrierten Identitätsmodul (3) konfiguriert sind, umfasst, wobei die Mittel zum Aufbauen eines gesicherten Tunnels (11, 13, 17) mit dem entfernten Server (7) Mittel zum Aufbauen einer Verbindung mit einem Server (9) des Benutzergeräteherstellers zum Anfragen einer Verbindung des Benutzergerätes (1) zu dem Netzbetreiber (NO1, NO2, NO3), welcher dem entfernten Server (7) entspricht, umfassen.

## Revendications

1. Procédé de téléchargement des informations d'identification d'abonné d'un serveur d'authentification distant (7) d'un opérateur de réseau (NOi) sur un équipement d'utilisateur (1) équipé d'un module d'identité intégré (3) par l'intermédiaire d'un réseau (2) dans lequel ledit module d'identité intégré (3) comprend des moyens pour établir un tunnel sécurisé (11, 13, 17) avec le serveur d'authentification distant (7) et dans lequel ledit procédé comprend les étapes suivantes :
- installation (101, 1001) d'une pile de protocoles d'établissement de tunnel, d'un certificat X.509 et d'une authentification du client dans le module d'identité intégré (3) ;
- établissement (102, 1002) d'une connexion sécurisée entre le serveur d'authentification distant (7) et l'équipement d'utilisateur (1) en utilisant l'authentification du client par les étapes suivantes :
- établissement d'une connexion entre l'équipement d'utilisateur (1) et un serveur (9) du fabricant de l'équipement d'utilisateur ;
- envoi du serveur (9) du fabricant de l'équipement d'utilisateur au serveur d'authentification distant (7), d'une demande visant à obtenir une liaison de l'équipement d'utilisateur (1) à l'opérateur de réseau (NO1, NO2, NO3) correspondant audit serveur d'authentification distant (7),
- établissement par le serveur d'authentification distant (7) de la connexion sécurisée à l'aide d'une session de gestion sécurisée,
- établissement (103, 1003) du tunnel sécurisé (11, 13, 17) entre le module d'identité intégré (3) et le serveur d'authentification distant (7) par l'intermédiaire de la connexion sécurisée établie à l'aide du certificat X.509 ;
- téléchargement des informations d'identification d'abonné du serveur d'authentification distant (7) sur le module d'identité intégré (3) par l'intermédiaire du tunnel sécurisé établi (11, 13, 17).

2. Procédé de téléchargement des informations d'identification d'abonné selon la revendication 1, dans lequel le module d'identité intégré (3) est une carte à circuit intégré universelle (UICC - universal integrated circuit card).

3. Procédé de téléchargement des informations d'identification d'abonné selon la revendication 1 ou 2, dans lequel le module d'identité intégré (3) est une carte de module d'identité d'abonné (SIM - subscriber identity module).

4. Procédé de téléchargement des informations d'identification d'abonné conformément à l'une des revendications précédentes dans lequel les informations d'identification d'abonné comprennent au moins un paramètre d'un module d'identité d'abonné universel (USIM - universal subscriber identity module).

5. Procédé de téléchargement des informations d'identification d'abonné selon la revendication 4, dans lequel les informations d'identification comprennent une clé secrète d'un module d'identité d'abonné universel (USIM).

6. Procédé de téléchargement des informations d'identification d'abonné selon la revendication 4, dans lequel les informations d'identification comprennent une identité internationale d'abonné mobile (IMSI - international mobile subscriber identity).

7. Procédé de téléchargement des informations d'identification d'abonné conformément à l'une des revendications précédentes dans lequel l'authentification du client comprend au moins un paramètre générique provisoire d'un module d'identité d'abonné universel (USIM) permettant une connexion initiale au serveur d'authentification distant (7).

8. Procédé de téléchargement des informations d'identification d'abonné selon la revendication 7, dans lequel le ou les paramètres génériques provisoires d'un module d'identité d'abonné universel (USIM) permettant une connexion initiale au serveur d'authentification distant (7) sont fournis par une entité dédiée (5) du réseau (2).

9. Procédé de téléchargement des informations d'identification d'abonné conformément à l'une des revendications précédentes dans lequel les moyens pour établir le tunnel sécurisé (11, 13, 17) avec le serveur d'authentification distant (7) comprennent un protocole d'authentification extensible du client (EAP - extensible authentication protocol).

10. Procédé de téléchargement des informations d'identification d'abonné selon la revendication 8, dans lequel les moyens pour établir un tunnel sécurisé (11, 13, 17) avec le serveur d'authentification distant (7) comprennent une sécurité de couche de transport en tunnel à protocole d'authentification extensible du client (EAP-TTLS - extensible authentication protocol - tunnelled transport layer security).

11. Procédé de téléchargement des informations d'identification d'abonné conformément à l'une des revendications précédentes dans lequel la connexion sécurisée établie entre le serveur d'authentification distant (7) et l'équipement d'utilisateur (1) est au moins en partie une connexion sans fil.

12. Procédé de téléchargement des informations d'identification d'abonné conformément à l'une des revendications précédentes dans lequel le serveur d'authentification distant (7) est un serveur d'authentification d'un opérateur de réseau mobile (NO1, NO2, NO3).

13. Serveur de réseau (7) comprenant des moyens pour établir une connexion sécurisée avec un équipement d'utilisateur (1) à l'aide d'une session de gestion sécurisée et des moyens pour établir un tunnel sécurisé avec un module d'identité intégré (3) réalisé dans ledit équipement d'utilisateur (1) sur la base de ladite session de gestion sécurisée et à l'aide d'un certificat X.509 installé dans le module d'identité intégré (3) dans lequel les moyens pour établir le tunnel sécurisé comprennent des moyens pour recevoir d'un serveur (9) du fabricant de l'équipement d'utilisateur, une demande visant à obtenir une liaison de l'équipement d'utilisateur (1) à l'opérateur de réseau (NO1, NO2, NO3) correspondant audit serveur du réseau (7) et des moyens pour établir la connexion sécurisée à l'aide de la session de gestion sécurisée, dans lequel le serveur du réseau (7) comprend des moyens pour télécharger des informations d'identification d'abonné sur le module d'identité intégré (3) par l'intermédiaire du tunnel sécurisé établi.

14. Module d'identité intégré (3) réalisé dans un équipement d'utilisateur (1) et comprenant
des moyens pour établir un tunnel sécurisé (11, 13, 17) avec un serveur distant (7) par l'intermédiaire d'une connexion établie entre ledit serveur distant (7) et ledit équipement d'utilisateur (1) à l'aide d'un certificat X.509 installé dans le module d'identité intégré (3) et
des moyens configurés pour recevoir, à travers le tunnel sécurisé établi, et installer des informations d'identification d'abonné dans ledit module d'identité intégré (3) dans lequel les moyens pour établir un tunnel sécurisé (11, 13, 17) avec un serveur distant (7) comprennent des moyens pour établir une connexion avec un serveur (9) du fabricant de l'équipement d'utilisateur pour demander une liaison de l'équipement d'utilisateur (1) à l'opérateur de réseau (NO1, NO2, NO3) correspondant audit serveur distant (7).
